## Europäisches Patentamt
## European Patent Office
## Office européen des brevets

(11) Publication number: **0 005 904**
**A1**

(12) **EUROPEAN PATENT APPLICATION**

(21) Application number: **79300702.2**

(22) Date of filing: **25.04.79**

(51) Int. Cl.²: **C 01 F 11/18**
**B 01 J 2/30, C 09 C 1/02**

(30) Priority: **28.04.78 US 901220**
**28.04.78 US 901221**
**28.04.78 US 900993**

(43) Date of publication of application:
**12.12.79 Bulletin 79/25**

(84) Designated Contracting States:
**BE DE FR GB LU NL SE**

(71) Applicant: **THE GEORGIA MARBLE COMPANY**
**2575 Cumberland Parkway, N.W.**
**Atlanta Georgia 30339(US)**

(72) Inventor: **Moon, Edward Leslie**
**910 31 Terrace N.E.**
**St. Petersburg Florida 33704(US)**

(74) Representative: **Baillie, Iain Cameron et al,**
**c/o Ladas, Parry, von Gehr. Goldsmith & Deschamps**
**Blumenstrasse 48**
**D-8000 München 2(DE)**

(54) Process and apparatus for producing surface treated particles.

(57) A process for producing surface treated particles by blending particles and treating agent to produce an intimately blended mixture. This blended mixture is then passed through an apparatus (10) including an impeller mill (12) which creates conditions such that the treating agent contacts the surface of the particles thereby producing surface treated particles. The invention further relates to a process for treating calcium carbonate particles with a treating agent such as calcium stearate or calcium rosinate, such that calcium stearate or calcium rosinate is uniformly coated on the surface of the calcium carbonate particles. In carrying out this aspect of the process, calcium carbonate is blended with the treating agent and sufficient water to have a 5 to 30% water content in the blended mixture. The mixture undergoes a reaction in an impact mixing chamber (12) forming part of the aforesaid apparatus (10) in the presence of hot gases to produce treated calcium carbonate particles. The particles are separated from a gaseous stream in a cyclone and the product collected at the lower exit of the cyclone. Use of both dry and wet reactants is disclosed.

TITLE MODIFIED
see front page

- 1 -

PROCESS FOR PRODUCING SURFACE TREATED PARTICLES

The invention relates to a process for producing surface treated particles, and more particularly to a process and apparatus for producing freely flowing, finely-divided, exceptionally white particles of calcium carbonate having a treating agent uniformly disposed on the surfaces of the particles.

Processes for the production of surface treated particles are well known. However, prior processes generally employ an aqueous solution or dispersion of the treating agent. In general, these prior processes employ an amount of water that exceeds 20% and frequently exceeds 30%. The removal of the water is expensive in those cases wherein the resultant particles are desired in their dry, free-flowing form.

Calcium carbonate, one of the most abundant raw materials, has enjoyed wide and varied use as a construction material and a filler material. It is particularly important in using it as a filler to be able to impart lubricity and water-repellent properties to the calcium carbonate as well as to improve the dispersion of the calcium carbonate particles. Thus, properties of the calcium carbonate are much improved for use in plastics, paints, rubbers, etc. However, imparting lubricity and water-repellency to the calcium carbonate particles or improving the dispersion of the particles should not impair other properties of the particles, such as whiteness, flowability or size. Presently available calcium carbonate treated to impart lubricity and water repellency suffers in a number of respects, for example the coating process is nonuniform resulting in a lack of total water repellency in the product. Similarly, commonly used methods to treat calcium carbonate in order to improve dispersion suffer in a number of respects, for example the coating process is nonuniform. The time required to treat the calcium carbonate is typically 3 or 4 hours. The temperature requirements of the process may be so high that the product is discolored or darkened.

In prior treatments to impart lubricity and water-repellency to the calcium carbonate particles or to improve their dispersion, some of the reactant or by-product often-times is left on the carbonate particles rendering them unusable in many situations. Particle size control is also difficult to achieve in conjunction with uniform treatment. Other processes produce a tackiness which causes the parti-cles to stick together and prevents the free-flowing property so highly desirable for use as a filler.

U.S. Patent No. 2,999,762 discloses a process for coating calcium carbonate with stearic acid employing a large liquid mass and requiring the removal of the liquid phase. Removal of the liquid phase and contaminants is difficult. U. S. Patent No. 3,619,264 teaches heating calcium carbonate with stearic acid in an autoclave. Uniform coating and removal of excess stearic acid are hard to achieve in this process. Processes which require subsequent comminution or pulverizing do not give a uniform coating on the particles.

Accordingly, it is an object of the present invention to provide an improved process for producing surface-treated particles which exhibit improved lubricity and water repellency as well as good dispersibility.

The present invention provides a process for producing surface treated particles comprising in sequence the steps of blending particles and treating agent to produce an intimately blended mixture, and passing the intimately blended mixture through an impeller mill under conditions such that the treating agent contacts the surface of the particles thereby producing surface treated particles.

One feature of the invention lies in preparing

treated calcium carbonate which is substantially free of the disadvantages of the prior art.

A further feature is to prepare treated calcium carbonate particles which are exceptionally white, dry and free-flowing.

Additional features and advantages of the present invention will be apparent to those skilled in the art by reference to the following detailed description and drawings wherein:

Figure 1 is a partially cutaway view of an apparatus suitable for practicing the process of the present invention and;

Figure 2 is a partially cutaway view of a cyclone adapted to be employed with the apparatus of Figure 1 in order to recover the surface treated particles produced by the process of the present invention and;

Figure 3 is a sectional view taken along line 3-3 of Figure 1.

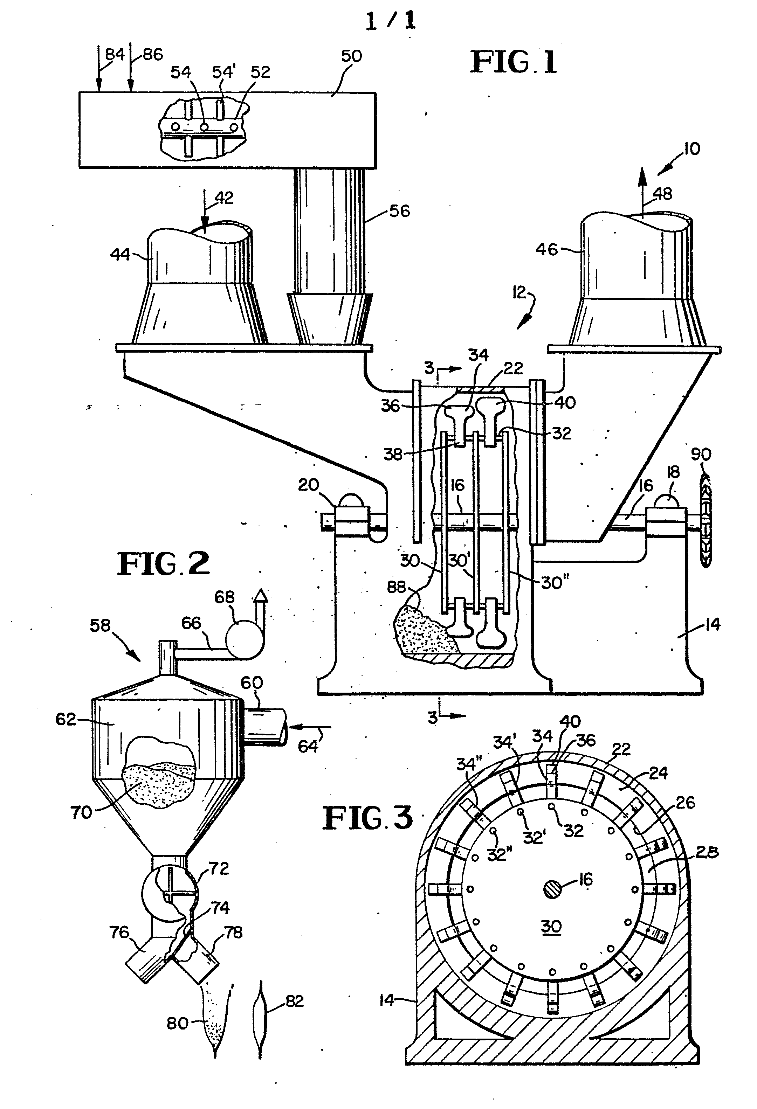

Referring now to the drawings and in particular to Figure 1 there is shown an apparatus 10 suitable for practicing the process of the present invention. The apparatus 10 comprises an impeller mill 12 having a base 14 with horizontal main shaft 16 journaled on the base 14 by means of bearings 18 and 20. A closed cylindrical housing 22 is attached to the base 14 and has its axis coincidental with the main shaft 16. As shown in Figure 3 a collar 24 is attached to the cylindrical housing 22. The collar 24 has an inside rim 26 which defines a circular opening 28. Within the cylindrical housing 22 and fixedly attached to the shaft 16 are three circular disks 30, 30', 30". The outside diameter of the circular disks 30, 30', 30" is only slightly smaller than the inside rim 26 of the collar 24.

A plurality of hammer shafts 32, 32', 32" are attached to the circular disks 30, 30', 30" near their peripheries. The axes of the hammer shafts 32, 32', 32" are parallel to the axis of the main shaft 16.

A plurality of smaller hammers 34, 34', 34" are journaled respectively on the hammer shafts 32, 32', 32". The center of gravity of the hammer 34 is spaced from the axis of the hammer shaft 32 permitting the hammer 34 to assume a radial position when the disk 30 and the main shaft 16 are rotated. The outer extremity 36 of the hammer shaft 34 is broader than the inner extremity 38. The impeller mill 12 is also provided with a plurality of larger hammers such as the large hammer 40. The large hammer 40 is similar in construction to the small hammer 34 except that it is bigger. The apparatus 10 is also provided with a furnace (not shown) adapted to produce hot gases and inject them in the direction of the arrow 42 through the duct 44. The hot gases pass through the impeller mill 12 parallel to the main shaft 16 and past the hammers 34, 40 between the disk 30 and the inside rim 26 of the collar 24. The hot gases flow from the cylindrical housing 22 through duct 46 in the direction of arrow 48.

The apparatus 10 is also provided with a paddle mixer 50 having therein a shaft 52 with a plurality of paddles 54, 54'. The outlet of the paddle mixer 50 is connected to a chute 56 which discharges to the impeller mill 12.

The apparatus 10 can be connected to a separator 58 shown in Figure 2. The separator 58 comprises an inlet duct 60, discharging to a cyclone 62 and adapted to receive hot gases coming in the direction of the arrow 64. The hot gases free of entrained particular material leave the cyclone 62 through the duct 66 under the influence of the fan 68. Treated particles 70 can leave the cyclone 62 by means of valve 72. Flapper 74 is employed to direct the treated particles 70 through the chute 76 or alternatively the chute 78. Treated particles leaving the chute 76 can be directed to the paddle mixer 50 in order to alter the ratio of ingredients entering the impeller mill 12. Treated particles 70 can be discharged through the chute 78 into an open bag 80 which can then be formed into a closed bag 82 for transport.

The impeller mill 12 useful in the process of the present invention is available substantially in its present form from the Raymond Division of Combustion Engineering Inc., Chicago, Illinois, USA, and is described in their Catalog No. 104 entitled "Raymond Imp Mill".

In operation untreated particles are fed to the paddle mixer 50 as shown by the arrow 84. Likewise a treating agent is fed to the paddle mixer 50 as shown by the arrow 86. The untreated particles and the treating agent are mixed in the paddle mixer 50 and discharged through the chute 56 into the impeller mill 12. In the impeller mill 12 the particles fall to the bottom and form a pile 88. The shaft 16 is caused to rotate by means (not shown) attached to the sprocket 90 which is fixedly attached to the shaft 16. Likewise the disks 30, 30', and 30" rotate causing the hammers represented by the hammers 34 and 40 to extend into a radial position. The hammers rotate contacting the pile 88 of particles and causing them to be whirled and rapidly distributed within the cylindrical housing 22. The furnace (not shown) produces hot gases which enter the impeller mill 12 through the duct 44 and carry the particles through the impeller mill 12 and out of the impeller mill 12 through the duct 46 in the direction of the arrow 48, leading to a separator such as that shown in Figure 2.

The shaft 16 of the impeller mill 12 can rotate at widely varying speeds but generally rotates at 1000 to 4000 revolutions per minute. The temperature of the hot gases entering through the duct 44 can also vary widely but is generally between 250°F.(721°C.) and 1800°F.(982°C.) and preferably between 350°F.(177°C.) and 1200°F.(649°C.). The particle size of the material entering the impeller mill 12 through the chute 56 can vary widely but is generally from 0.001 to 100 microns and is preferably between 0.2 and 20 microns. As employed in the present process the impeller mill 12 does not contribute to an appreciable size reduction of the particles entering through the chute 56. In fact, the average residence time of the particles in the cylindrical housing 22 is generally only 0.1 to 30 seconds. This small residence time permits the use of hot gases which are generally at a temperature in excess of that which would, under other circumstances, cause thermal degradation of either the particles or the treating agent.

The particles that can be treated according to the process of the present invention can be of widely varying chemical composition. In its broadest aspects the process of the present invention can be employed to treat particles of diatomaceous earth; pigments such as titanium dioxide and zinc oxide; organic materials such as bone; mineral materials such as asbestos, magnesium oxide, calcium carbonate, kaolin, graphite, mica, gypsum, lime; foodstuffs such as sugar, cocoa, flour; synthetic resins such as polyesters, polyamides, polyvinyl chloride and other particulate materials virtually without limitation.

According to another aspect of the present invention treating agents can be employed which appear only to coat the surface of the particles. These treating agents do not appear to react chemically with the surface of the particles. Examples of suitable treating agents include among others paraffin wax having a melting point between 160° F. (72°C.) and 165°F. (74°C.) such as that available under the trade name ADVAWAX-165 available from Cincinnati Millicron, Cincinnati, Ohio; polyethylene waxes; partially oxidized polyethylene waxes such as "PLASTIFLOW-POP" from N. L. Industries, Hightstown, New Jersey; and "POLYETHYLENE-629A" available from Allied Chemical; silicone oils such as polysiloxanes such as that available from the General Electric Company under trade name "SS-4251"; esters of carboxylic acids such as dioctylphthalate and lower alkyl esters of carboxylic acids such as ethyl stearate; fire retardants such as chlorinated waxes such as "CHLORO-WAX-70" available from Diamond Shamrock containing 70% chlorine; tetrabromo bisphenol-A and derivatives thereof such as "BA-50" available from Great Lakes Chemical Company; antimony pentoxide such as that available from N.L. Industries, Inc. as "TEXINL FR-1" and other materials virtually without limitation.

According to one important aspect of the present invention the treating agent is one which chemically reacts with the particles. Of particular importance are particles of calcium carbonate with which any treating agent which has a labile hydrogen atom will chemically react. Examples of suitable treating agents having a labile hydrogen atom include among others: phenol, i.e., hydroxybenzene, substituted phenols such as picric acid; carboxylic acids such as acetic acid, stearic acid, oleic acid, abietic acid and benzoic acid; carboxylic acid anhydrides such as phthalic anhydride and acetic anhydride; carboxylic acid chlorides such as the acid chlorides corresponding to the above-described carboxylic acids as well as benzoyl chloride; carboxylic acid salts such as the ammonium, and the alkali metal salts of the above-described carboxylic acids examples of which include among others ammonium stearate and sodium oleate; sulfonic acids such as p-toluene sulfonic acid, benzene sulfonic acid, and other alkyl sulfonic acids; sulfinic acids such as benzene sulfinic acid; and substituted phosphoric acids such as ethyl phosphoric and benzyl phosphoric acid.

The impeller mill 12 provides a unique heated mixer for the chemical reaction of the calcium carbonate particles with a treating agent such as ammonium stearate at elevated temperatures to form calcium stearate treated calcium carbonate. A water content of 5-30 percent by weight is critical to the reaction although the mechanistic role played by the water is not fully understood. It is also apparent that the short contact time at high temperatures is also critical to the reaction. Each particle is in the impact chamber for reaction a short time, 0.1 to 5 seconds. The temperature in the inlet gases to the impact chamber is generally 250°F. (121°C.) to 1800°F. (982°C.) and preferably 350°F. (177°C.) to 1200°F. (649°C.) and ideally 700°F. (371°C.) to 750°F. (399°C.). At much higher temperatures the stearate tends to decompose. At lower temperatures the reaction rate is undesirably slow.

The temperature of the gases leaving the vent is typically 200°F. (93°C.) to 300°F. (149°C.).

The calcium carbonate used in the present invention can be any finely divided calcium carbonate. Limestones such as chalk and marble are sources of calcium carbonate. Ordinary dolomite and dolomitic limestones in which as much as half of the calcium has been replaced by magnesium also serve as sources of calcium carbonate. Marble is preferred. Calcium carbonate, known as Gama-Sperse 6532 is a dry product with particle sizes of 0.2 to 14 microns, available from Georgia Marble Co., Atlanta, Georgia. Also available from Georgia Marble is a calcium carbonate known as Gamaco which has particle sizes of 0.2 to 14 microns. Gamaco is available as a slurry of 69 to 71% solids.

Slurry can be blended with water to have a water content of 15 to 50% by weight. Dry calcium carbonate can be added to adjust the final water content.

Ammonium stearate can be used in both a wet form and a dry form. It is available as a 33% aqueous dispersion of ammonium stearate containing approximately 1.5 weight percent ethylene glycol from Diamond Shamrock Corp., Cleveland, Ohio. Solid ammonium stearate powder is available from Witco Chemical Corp. It is important that the ammonium stearate be relatively pure and free of ammonium carbonate. Ammonium carbonate inhibits the reaction of ammonium stearate with calcium carbonate.

The ammonium stearate is used in a weight ratio to calcium carbonate generally from 0.1:100 to 5.0:100 and is preferably 0.5:100 to 3.0:100. At much lower ratios there is insufficient ammonium stearate to react with the calcium carbonate. At higher ratios, not all the ammonium stearate reacts with the calcium carbonate and the excess is a contaminant with the particles.

Water is added to the calcium carbonate and ammonium stearate to achieve a weight percent of 5 to 30% and preferably 10 to 20% of the weight of the mixture. Less water does not allow the chemical reaction to go to completion and the product contains ammonium stearate. Too much water inhibits the product from drying resulting in a caked, nonflowing condition. Additionally, any water contained in the product interferes with the desired hydrophobic character of the particles.

TGA, thermogravimetric analysis, was employed to determine weight loss upon heating up to 500°C. At high temperatures organic material and some inorganic salts are decomposed to gaseous products which escape from the sample. TGA is essentially a loss on ignition (LOI) analysis that can be done rapidly due to the very small sample size. The shape of the weight loss curve with respect to temperature rise is a significant part of the analysis.

DTA, differential thermal analysis, also uses a small sample and is a method of identifying materials by comparing the heat capacity of the sample with that of a reference or standard material over a temperature range of about 200°C. Decompositions, phase changes, volatile losses, changes in crystalline form and other physical and chemical alterations which affect the heat capacity of the sample are detected.

Other analytical tests, such as atomic absorption spectroscopy for metal ions and infrared spectroscopy, were used to examine the treated calcium carbonates, samples of ammonium stearate, metallic stearates and stearic acid.

Initial TGA results indicated that the treatment efficiency of the inventive process was very good. LOI for samples treated with 2% ammonium stearate showed 1.8 to 1.9 percent weight loss (theoretical weight loss for complete conversion is 1.88%). Samples treated with 1.5% ammonium stearate had weight losses of 1.2-1.4 percent (theory = 1.4%).

This aspect of the process is useful for producing hydrophobic calcium carbonate particles which serve as fillers in plastics such as polyvinyl chloride, polyethylene, polypropylene, polyethylene terephthalate, and mixtures of styrene and unsaturated polyesters.

The impact chamber 12 also provides a unique heated mixer for the chemical reaction of another treating agent such as rosin acid with calcium carbonate particles at elevated temperatures to form calcium rosinate treated calcium carbonate. A water content of 5-30 percent by weight is general but may vary widely. It is apparent that the short contact time at high temperatures is critical to the reaction. Each particle is in the impact chamber for reaction a short time, 0.1 to 5 seconds. The temperature in the inlet gases to the impact chamber is generally 250°F. (121°C.) to 1800 F. (982°C.) and preferably 350°F. (177°C.) to 1200°F. (649°C.) and ideally 700°F. (372°C.) to 750°F. (399°C.). At much higher temperatures the rosin acid tends to decompose. At lower temperatures the reaction rate is undesirably slow.

The temperature of the gases leaving the vent is typically 200°F. (93°C.) to 300°F. (149°C.).

The calcium carbonate used to form calcium rosinate treated calcium carbonate can be any finely divided calcium carbonate as noted above with regard to the calcium stearate treated calcium carbonate.

Similarly slurry can be blended with water to have a water content of 15 to 50% by weight. Again, calcium carbonate may be added to adjust the final water content.

Rosin acid is the acidic material obtained from rosin. Rosin is a natural product of the pine tree indigenous to our Southeastern states. Commercial rosin may be obtained by tapping the living pine tree and distilling the product or it may be obtained by the solvent extraction of pine stumps which have been in the ground for a number of years after the tree is cut down. Rosin is composed of approximately 90 percent acidic material and 10 percent neutral material. The characteristics of rosin are determined largely by the acid fraction. The acids in the rosin acid portion are structurally similar in that they all contain a more or less saturated phenanthrene nucleus with a methyl group or a carboxyl group on the 1 carbon and an angular methyl group on the 4a carbon. They differ in the nature of the substituents on the 7 carbon in the amount and position of the unsaturation. The largest portion of the acid fraction, about 50 percent, consists of abietic acid, levopimaric acid, and neoabietic acid, in which the substituent on the 7 carbon is an isopropyl group containing two ethylenic groups in conjugation. The members of this group differ only in the position of the conjugated system. Approximately another 20 percent is made up of two stereoisomers, dextropimaric and isodextropimaric acids, which carry a methyl and a vinyl group in the 7 position. The remainder of the acid fraction comprises tetrahydrobietic acid which is devoid of ethylenic unsaturation, dihydroabietic acid which contains one double bond, and dehydroabietic acid, the unsaturation of which consists of an aromatic ring. All of the rosin acids are reactive through the carboxyl group. They all form salts of calcium which herein is

designated calcium rosinate. Rosinate is generic to all of the acids in the rosin acid. Rosin acid is commercially available from Hercules Powder Co., Wilmington, Delaware.

Also, the mixture of acids in rosin acid may be chemically modified or converted to a high proportion of a specific acid (such as dihydroabietic acid) through partial or complete hydrogenation, dehydrogenation and disproportionation. Otherwise, rosin acids may be extensively refined to produce products of very pale yellow to white color. Partial hydrogenation is desirable, since it reduces the oxidation ("drying") of the unsaturated sites of the rosin acid. Suitable modified rosins are available from Hercules Powder Company, Wilmington, Delaware, under the trademarks, STAYBELITE, RESIN 731D and POLY-PALE RESIN. Refined wood rosin, PEXITE, from Hercules is also suitable. Also available from Hercules as dispersions are rosins designated DRESINOL 205 and DRESINOL 40 which are approximately 40% solids aqueous-based dispersions of hydrogenated rosin. Rosins are available with a wide variety of properties such as melting point, acidity, and color and rosins can be selected for use in the inventive process with regard to the properties desired in the ultimate calcium carbonate product.

The rosin acid is used in a weight ratio to calcium carbonate generally from 0.1:100 to 5.0:100 and is preferably 0.5:100 to 3.0:100. At much lower ratios there is unsufficient rosin acid to react with the calcium carbonate. At higher ratios, not all the rosin acid reacts with the calcium carbonate and the excess is a contaminant with the particles.

Water may be added to the calcium carbonate and rosin acid to achieve a weight percent of 5 to 30% and is preferably 10 to 20% of the weight of the mixture. Water does not enter into the chemical reaction. However, too much water inhibits the product from drying resulting in a caked, nonflowing condition. Additionally, any water contained in the product may interfere with the desired properties of the particles.

The calcium carbonate, rosin acid and water may be mixed in drums, such as stainless steel drums fitted with internal lifting blades and rotated horizontally on a rolling device to mix the contents. Rolling it for 10 to 30 minutes is considered sufficient to mix the contents adequately. Alternatively, the ingredients may be emptied into a batch mixer not shown and the contents agitated by a spiral blade with a high speed intensifier.

TGA or thermogravimetric analysis tests as well as DTA or differential thermal analysis tests like those noted above with regard to the calcium stearate treated calcium carbonate particles were also performed with these rosin acid treated materials.

Other analytical tests, such as atomic absorption spectroscopy for metal ions and infrared spectroscopy, were also used to examine the treated calcium carbonates, samples of rosin acid and metallic rosinates.

Initial TGA results indicated that the treatment efficiency of this aspect of the process was very good. LOI for samples treated with 1% rosin acid shows 0.97 to 1.1 percent weight loss (theoretical weight loss for complete conversion is 1.00%). Samples treated with 1.5% rosin acid had weight losses of 1.2-1.4 percent (theory = 1.5%).

This aspect of the process is useful for producing rapidly dispersable calcium carbonate particles which serve as fillers in plastics such as polyvinyl chloride, polyethylene, polypropylene, mixtures of styrene and unsaturated polyesters and in oil-based paints. An additional benefit in paint is a tendency to increase the hiding power of primers and enamels, thereby increasing the coverage of a given quantity of paint.

The invention is further illustrated by the following examples in which all parts and percentages are by weight unless otherwise indicated. These non-limiting examples are illustrative of certain embodiments designed to teach those skilled in the art how to practice the invention and to represent the best mode contemplated for carrying out the invention.

### Example 1

This example is illustrative of the process of the present invention wherein the treated particles are those of calcium carbonate and the treating material is ammonium

Referring to Figures 1, 2 and 3 of the drawings ammonium stearate is added to the paddle mixer 50 together with calcium carbonate and water in a weight ratio of 2:100:15. Hot gases are supplied to the impeller mill 12 through the duct 44 at a temperature of 1200°F. (649°C.). The shaft 16 of the impeller mill 12 is rotated at a speed of 1800 rpm. The treated calcium carbonate particles are recovered in the cyclone 62 and found to have thereon a chemically adhering coating of stearate. The size of the calcium carbonate particles entering the paddle mixer 50 is approximately 0.2 to 20 microns and is approximately the same size as the treated particles 70 in the cyclone 62.

### Example 2

This example is further illustrative of the invention for preparing calcium stearate treated calcium carbonate particles. The following amounts of the following items are blended.

| Item | Name | Amount | Weight % |
|------|------|--------|----------|
| A | Gama-Sperse 6532 | 2400 | 90.2 |
| B | Ammonium Stearate (dry) (free of ammonium carbonate) | 32 | 1.2 |
| C | Water | 229 | 8.6 |

Items A, B and C are combined and mixed by a batch process in 55-gallon (208 liters) stainless steel drums fitted with internal lifting blades. The drums are placed on a rolling device and rotated horizontally for 10-30 minutes to mix the contents. The batches are then transferred to a vibratory screw-feed hopper located above the impact mill inlet. The blend falls by gravity into the chamber of the impact mill. The impact mill is equipped with a flash drying system and the RPM of the mill is 3600. The temperature of the inlet gases to the chamber is 1000-1200°F. (538°C.-649°C.). The heated air and the frictional heat of the arms in the impact mill trigger the chemical reaction of the ammonium stearate with the outside surfaces of the calcium carbonate particles to form calcium stearate treated calcium carbonate particles. The heat dries the particles which are conveyed to the cyclone. The product is bagged at the lower end of the cyclone. Finer particles are collected and later combined with the product collected from the outlet of the cyclone. The gases of carbon dioxide, excess air, water vapor and ammonia escape through the top vent. The temperature of the outlet gases at the vent is 240-245°F. (116°C.-118°C.). The product has less than 0.1% water, has no odor of ammonia, is extremely hydrophobic, and exceptionally white.

### Examples 3 - 9

These examples are illustrative of the present invention employing varying amounts of water. The procedure for Example 2 was followed with the exception that the amount of Item C was varied according to Table I. The batch mix time was the same, i.e., 30 minutes in Examples 3-4 and 8-9. Example 5 had a mix time of 20 minutes and Examples 6-7 ten minutes. A product similar to the product in Example 2 was obtained.

The products were tested for organic percentages using thermogravimetric analysis and the presence of calcium stearate and ammonium stearate was determined by differential thermal analysis. The results are summarized in Table I.

## TABLE I

| Example | Item C Weight % | % Organic | Calcium Stearate | Ammonium Stearate |
|---------|-----------------|-----------|------------------|-------------------|
| 2 | 8.6 | 1.47 | Pos.[1] | Neg.[2] |
| 3 | 11.2 | 1.41 | Pos. | Neg. |
| 4 | 8.2 | 1.17 | Pos. | Neg. |
| 5 | 7.9 | 1.29 | Pos. | Neg. |
| 6 | 7.0 | 0.68 | Pos. | Neg. |
| 7 | 6.5 | 1.00 | Pos. | Neg. |
| 8 | 12.0 | 1.14 | Pos. | Neg. |
| 9 | 12.0 | 1.00 | Pos. | Neg. |

[1] Positive

[2] Negative

## Example 10

This example is illustrative of the invention for preparing calcium stearate treated calcium carbonate particles using a slurry of calcium carbonate and dilute ammonium stearate. The following amounts of the following items were used:

| Item | Name | Amount | Weight % |
|------|------|--------|----------|
| A | Ammonium stearate dispersion (NOPCO DC 100 A) | 60 | 3.7 |
| B | Dry calcium carbonate | 563 | 34.7 |
| C | Slurry 75% solids calcium carbonate | 1000 | 61.6 |

Items A & B are blended together and the resultant mixture charged to the paddle mixer concurrently with Item C. The water content of the mixture is 9%. The blended materials enter the impact mill by gravity. The procedure of Example 2 was followed in recovering the product. The temperature of the gases fed to the impact chamber is 850°F. (455°C.). The procedure of Example 2 was followed in recovering the product. The temperature of the gases in the vent is 245°F. (118°C.).

## Examples 11 - 14

These examples are illustrative of the present invention using a slurry and varying the water content and temperature. The procedure of Example 10 is followed with the exception that the quantity of water in the final blend is 15-16.8% in Examples 11 and 12. The temperature at the inlet to the impact chamber in Example 13 is 1350-1400°F. (733°C.-760°C.) and the temperature at the vent is 240-250°F. (116°-121°C.). In Examples 12 and 14, the temperature at the inlet is 1100-1200°F. (593°-649°C.) and at the vent 245°F. (118°C.).

## Example 15

Example 15 is illustrative of the invention. This example shows the use of dry calcium carbonate and dry ammonium stearate with a slurry of calcium carbonate. The calcium carbonate and ammonium stearate are blended together in accordance with Example 2. The dry blend and the slurry which had a solids content of 75% are introduced simultaneously into the paddle mixer. The water content by weight of total material is 15-16%. The procedure of Example 2 was followed in recovering the product. The temperature of the inlet to the impact chamber is 1300°F. (704°C.) and the temperature of the vent is 245°F. (118°C.).

The products of Examples 10 - 15 were dry, had no ammonia odor, were extremely hydrophobic and were exceptionally white. Differential thermal analysis showed positive for calcium stearate and negative for ammonium stearate and other contaminants.

## Example 16

This example is illustrative of the present invention employing dry calcium carbonate, ammonium stearate dispersion and free water.

The procedure of Example 2 is repeated except that the free water is added to adjust the water content to 16 weight percent. Similar results are obtained.

## Example 17

This example is illustrative of the invention for preparing calcium rosinate treated calcium carbonate particles. The following amounts of the following items are blended.

| Item | Name | Amount | Weight % |
|------|------|--------|----------|
| A | Gama-Sperse 80 | 151.5 | 84.2 |
| B | Wood Rosin (acid) | 1.5 | 0.8 |
| C | Water | 27 | 15.0 |

Item B is melted and an equal weight of Item A is added and mixed to form a viscous paste. Upon cooling, the above mixture becomes a solid mass. The solid mass is pulverized to a fine, white powder. This powder, the balance of Item A and Item C are combined and mixed in an intensive mixer such as a Littleford Batch Mixer Model FKM 600D. The batches are combined and transferred to a vibratory-screw feed hopper located above the impact mill inlet. The blend falls by gravity into the chamber of the impact mill. The impact mill is equipped with a flash drying system and the mill is operated at 3500 RPM. The temperature of the inlet gases is 600-700°F. (316°-371°C.). The heated air and the frictional heat of the arms in the impact mill trigger the chemical reaction of the wood rosin with the exposed surfaces of the calcium carbonate particles to form calcium rosinate treated calcium carbonate particles. The heat dries the particles which are conveyed to the cyclone. The product is collected at the lower end of the cyclone. Fine particles entrained in the gaseous stream of carbon dioxide, water vapor and flash dryer combustion products are collected by bag filters and combined with the product collected at the cyclone. The outlet gas temperature is 250-260°F. (121°-127°C.). The product is white, has less than 0.1% moisture, is free-flowing and smells slightly of rosin. The product disperses rapidly and completely in organic plasticizers such as dioctylphthalate (DOP). The LOI determination for this product by TGA indicated a treatment level of 0.99%.

### Example 18

This example is illustrative of the present invention for preparing calcium rosinate treated calcium carbonate particles in which no water is added.

| Item | Name | Amount | Weight % |
|---|---|---|---|
| A | Gama-Sperse 80 | 151.5 | 99.0 |
| B | Wood Rosin (acid) | 1.5 | 1.0 |

The procedure of Example 1 was followed with the single exception that water was omitted. The inlet gas temperature was 380-400°F. (193°-204°C.). A product similar to the product in Example 17 was obtained.

### Example 19

This example is illustrative of the present invention for preparing calcium rosinate treated calcium carbonate particles using the rosin acid as a dispersion in water.

| Item | Name | Amount | Weight % |
|---|---|---|---|
| A | Gama-Sperse 80 | 150 | 84.1 |
| B | Rosin Acid Dispersion 45% (in water) | 3.3 | 1.9 |
| C | Water | 25 | 14.0 |

Items A, B and C are combined and mixed by a batch process in a high intensity mixer such as Littleford Batch Mixer Model FKM 600D for 3 minutes. Batches are combined and introduced into the impact mill chamber with a vibratory-screw feeder as described in Example 1. The inlet air temperature is 620-760°F. (327°-349°G.), and the temperature of the outlet gases at the vent is 260-270°F. (127°-132°C.). A product similar to the product in Example 16 was obtained.

### Example 20

This example is illustrative of the invention for preparing calcium rosinate treated calcium carbonate particles employing rosin acid dispersion in water.

| Item | Name | Amount | Weight % |
|---|---|---|---|
| A | Gama-Sperse 80 | 150 | 97.8 |
| B | Rosin Acid Dispersion 45% (in water) | 3.3 | 2.2 |

The procedure of Example 19 is followed except that no additional water is added. The procedure varies only in that the inlet gas temperature is 400-420°F. (204°-216°C.) and the outlet gases at the vent are 265-267°F. (129°-131°C.). A product similar to the product of Example 17 was obtained.

### Example 21

This example is illustrative of the present invention for preparing calcium rosinate treated calcium carbonate particles using a slurry of calcium carbonate.

| Item | Name | Amount | Weight % |
|---|---|---|---|
| A | (Dry Calcium Carbonate) Gamaco | 8000 | 56.0 |
| B | (Slurry 75% Solids Calcium Carbonate) Gamaco slurry | 6000 | 42.0 |
| C | Rosin Acid Dispersion 45% in water | 278 | 2.00 |

Items A and B are charged directly to the paddle mixer concurrently with Item C. The water content of the mixer is 11.6%. The blended materials enter the mill by gravity. The temperature of the gases fed to the impact chamber is 500-550°F. (260°-288°C.). The procedure of Example 17 was followed in recovering the product. The temperature of the gases in the vent is 230-250°F. (110°-121°C.).

Although the invention has been described in considerable detail with reference to certain preferred embodiments thereof, it will be understood that variations and modifications can be effected within the spirit and scope of the invention as described above and as defined in the appended claims.

0005904

CLAIMS

1. A process for producing surface treated particles comprising in sequence the steps of blending particles and treating agent to produce an intimately blended mixture, and passing the intimately blended mixture through an impeller mill under conditions such that the treating agent contacts the surface of the particles thereby producing surface treated particles.

2. The process of Claim 1 wherein the particles in the blending step have a size of 0.001 to 100 microns.

3. The process of Claim 1 or 2 wherein the intimately blended mixture comprises from 5 to 30 weight percent water based upon the combined weight of the water and the intimately blended mixture.

4. The process of any of Claims 1 to 3 wherein the average residence time of the particles in the impeller mill is 0.1 to 30 seconds.

5. The process of any of the preceding claims wherein the particles are those of calcium carbonate.

6. The process of any of the preceding claims wherein the treating agent chemically reacts with the particles.

7. The process of Claim 6 wherein the chemically reactive treating agent has a labile hydrogen atom.

8. The process of Claim 7 wherein the labile hydrogen atom is supplied by a material selected from the group consisting of: phenol, substituted phenols, carboxylic acids, carboxylic acid anhydrides, carboxylic acid chlorides, carboxylic acid salts, sulfonic acids, sulfinic acids, and substituted phosphoric acids.

9. A process for producing treated calcium carbonate particles, comprising in sequence the steps of blending finely divided calcium carbonate, a treating agent, water in an amount sufficient to induce reaction between the calcium carbonate and the treating agent, to produce an intimately blended mixture, and conveying the intimately blended mixture to an impact mixing chamber in which there is a stream of hot gases which causes the treating agent to react with the calcium carbonate particles.

10. The process of Claim 9 in which the calcium carbonate is introduced as a slurry.

11. The process of Claim 9 or 10 wherein the temperature of the hot gases is 1100-1400°F. (594°C.- 760°C.).

12. The process of Claim 9, 10 or 11, wherein the particles of calcium carbonate have a size range of 0.001 to 100 microns.

13. The process of Claim 9, 10, 11 or 12, wherein the particles of calcium carbonate have a size range of 0.2 to 20 microns.

14. The process according to any of Claims 9 to 13 wherein the source of calcium carbonate is marble.

15. The process according to any of Claims 9 to 14 wherein the weight ratio of the treating agent to calcium carbonate is 0.1:100 to 5.0:100.

16. The process of any of Claims 9 to 15 in which the treating agent is rosin acid, preferably abietic acid.

17. The process of any of Claims 9 to 15, wherein the treating agent is ammonium stearate.

18. The process of Claim 17 in which the ammonium stearate is introduced as an aqueous dispersion.

19. A process of Claim 17 or 18, wherein the source of calcium carbonate is chalk, limestone, dolomite or dolomitic limestone.

20. A process for producing freely-flowing, finely-divided, exceptionally white particles of calcium carbonate exposed to a reactive treating agent uniformly on the surfaces of the calcium carbonate particles, comprising in sequence the steps of blending finely divided calcium carbonate, a treating agent and water in an amount sufficient to produce a 5-30% water content by weight of the total mixture, to produce an intimately blended mixture, conveying the intimately blended mixture to an impact chamber in which there is a stream of hot gases at 250 to 1800°F.

(121°C.-982°C.) which causes the intimately blended mixture to react to form agent treated calcium carbonate particles and a gaseous stream of carbon dioxide and water vapor, separating the agent treated calcium carbonate particles from the gaseous stream, and collecting the agent treated calcium carbonate particles.

21.    The process of Claim 20, wherein the temperature of the gaseous stream is 200-300°F. (93°C.-149°C.).

22.    The process of Claim 20 or 21, wherein the calcium carbonate has a particle size of 0.001 to 100 microns and carbonate and water with a water content of 15 to 50%, the intimately blended mixture has a final water content of 5 to 30% by weight of the total mixture.

23.    The process of Claim 20, 21 or 22, including the steps of conveying the agent treated calcium carbonate particles to a cyclone for separation from the gaseous stream, and collecting the dry agent treated calcium carbonate particles from the exit of the cyclone.

24.    The process of any of Claims 20 to 23, wherein the treating agent is an aqueous dispersion which is mixed with dry calcium carbonate before blending.

25.    The process of any of Claims 20 to 24, wherein the treatment agent is rosin acid or ammonium stearate.

26.    A process for producing freely-flowing finely divided, exceptionally white particles of calcium carbonate exposed to a reactive treating agent uniformly on the surfaces of the calcium carbonate particles, comprising in sequence the steps of blending finely divided calcium carbonate particles with a particle size of 0.2 to 20 microns, a treating agent, water in an amount sufficient to produce a 5 to 30% water content by weight of the total mixture, to produce a blended mixture, wherein the weight ratio of the treating agent to water is 0.5:100 to 3.0:100, feeding the blended mixture into a paddle mixer to produce an intimately blended mixture, conveying the intimately blended mixture to an impact mixing chamber in which there is a stream of hot gases at 350 to 1200°F. (177°C. to 649°C.) which causes the intimately blended mixture to react to form agent treated calcium carbonate particles and a gaseous stream of carbon dioxide and water vapor, forcing the agent treated calcium carbonate particles to the top of a cyclone and the gaseous stream to a vent, collecting the agent treated calcium carbonate particles from the bottom of the cyclone, and allowing the gas stream to escape from the vent at a temperature of 200 to 300°F. (93°C. to 149°C.).

27.　The process of Claim 26, wherein the treating agent is rosin acid or ammonium stearate.

28.　Apparatus for use in carrying out the process according to any of the preceding claims, wherein said apparatus includes a base, a shaft journaled on the base, a housing attached to the base, a collar attached to the housing, the collar defining an opening, a disk attached to the shaft, a hammer shaft attached to the disk, a hammer journaled on the hammer shaft and adapted to contact the intimately blended mixture, means for passing hot gases across the housing and through the opening in order to entrain the intimately blended mixture in the hot gases.

29.　The apparatus of Claim 20 wherein the impeller mill rotates at 1000 to 4000 revolutions per minute.

30.　The apparatus of Claim 28 or 29 wherein the hot gases are passed through the impeller mill at a temperature of 250 to 1800°F. (121°C. to 982°C.).

31.　The apparatus of Claim 28, 29 or 30 wherein the main shaft is horizontally disposed in coincidence with the axis of the housing which is of cylindrical form, said collar having an inside rim defining a circular opening, said disk comprising at least one circular member fixedly attached to the shaft and having an outside diameter which is only slightly smaller than the inside rim of the collar, a plurality of said hammer shafts attached to the circular disk near the periphery thereof in such manner that the axes of the hammer shafts are parallel to the axis of the main shaft; and a plurality of said hammers each journaled on the corresponding hammer shaft.

32.　The apparatus of Claim 31, wherein the center of gravity of each hammer is spaced from the axis of each hammer shaft permitting the hammer to assume a radial position when the circular disk and the main shaft are rotated, and wherein the outer extremity of the hammer is broader than the inner extremity of the hammer.

33. The apparatus according to Claim 31 or 32, wherein the hot gas passage means is effective for passing hot gases parallel to the main shaft, past the hammers, between the circular disk and the inside rim of the collar and out from the cylindrical housing in order to entrain the intimately blended mixture in the hot gases.

FIG.1

FIG.2

FIG.3

European Patent Office

## DOCUMENTS CONSIDERED TO BE RELEVANT

| Category | Citation of document with indication, where appropriate, of relevant passages | Relevant to claim |
|---|---|---|
| X | <u>DE - C - 958 830</u> (OMYA)<br>* whole document * | 1,2, 6-9, 12,13, 15,16, 20,25-28,30 31 |
| X | <u>DE - B - 1 173 445</u> (OMYA)<br>* claim * | 19 |
| | <u>US - A - 3 499 784</u> (ORGANON)<br>* claims 1, 2, 8, 9 * | 1,2,3 |
| | <u>DD - A - 92 034</u> (H. WETZEL et al.)<br>* claim 1 * | 10,22 24 |
| A | <u>US - A - 2 565 930</u> (RAFFOLD PROCESS) | |
| A | <u>GB - A - 796 375</u> (PRODUITS CHIMIQUES ET MINERAUX) | |
| D | <u>US - A - 3 619 264</u> (HENKEL et CIE) | |
| D | <u>US - A - 2 999 762</u> (A.L. VERDIER) | |

**CLASSIFICATION OF THE APPLICATION (Int. Cl.²)**

C 01 F 11/18
B 01 J 2/30
C 09 C 1/02

**TECHNICAL FIELDS SEARCHED (Int.Cl.²)**

B 01 J 2/00
B 01 J 8/00
C 01 F 11/18
C 09 C 1/02
C 09 D 11/06
C 09 K 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| Berlin | 18-07-1979 | KESTEN |

EPO Form 1503.1  06.78